# EUROPEAN PATENT SPECIFICATION

(11) **EP 3 375 592 B1**
(45) Date of publication and mention of the grant of the patent: **19.06.2019**
(21) Application number: 17161261.7
(22) Date of filing: 16.03.2017
(51) Int. Cl.: B29C 49/24, B29C 49/62, B65D 77/04, B65D 1/02

(54) **CONTAINER**
BEHÄLTER
CONTENEUR

(43) Date of publication of application: 19.09.2018
(73) Proprietor: BillerudKorsnäs AB, 169 27 Solna (SE)
(72) Inventor: Ankerfors, Mikael, 194 53 Upplands Väsby (SE); Quasters, Mikael, 531 56 Lidköping (SE)
(74) Representative: Kransell & Wennborg KB

(56) References cited:
- EP-B1- 0 700 837
- CA-A1- 2 139 613
- FR-A1- 2 676 958
- JP-A- S59 118 436
- JP-A- 2000 255 577
- US-A1- 2016 236 806

## Description

### TECHNICAL FIELD

The invention relates to a method for forming a container, as well as a container, such as a bottle for liquid goods.

### BACKGROUND

Modern packaging technology has made it possible to store and distribute food and beverages safely and conveniently, preventing contamination and spoiling, and extending the shelf life and simplifying handling in a fashion totally unprecedented in history. While this development has helped to minimize the waste of food, and greatly simplified the distribution of food on a global scale, it has also resulted in increased amounts of packaging waste that needs to be addressed, preferably recycled.

Traditionally beverages have been supplied in glass bottles, and canned food in glass jars or metal cans. Systems for the collection and recycling of glass and metals have been established, but require a certain degree of consumer engagement and participation as the bottles, jars and cans need to be separated from other waste. In countries where there is a tradition of consumer awareness and recycling, and the necessary systems are in place, a large portion of packaging glass and metal is already recycled. This results in considerable savings in energy and natural resources. However, a portion of glass and metal packaging still unfortunately end up in landfills. Further, glass and metal packaging is heavy, and a reduction of weight would help to save energy in the distribution chain.

Plastic bottles and containers offer a solution for a lighter packaging and plastics such as PET and HDPE are well suited for packaging foods and beverages. The blow molded bottle is a widely used packaging, in particular for liquid goods, in particular beverages. Consequently, there is a need for facilitating the recycling of the plastic material as well as minimizing the amount of plastic used.

This has driven a development towards lighter plastic packaging solutions, both in terms of thinner and lighter packaging, and the use of composite materials. One example is plastic laminated cardboard container. In this case the cardboard from which the body of the container is formed, may be virgin or recycled material. The cardboard is, before converting into a container, laminated with a suitable barrier coating, which also acts as a barrier between the liquid and the cardboard and protects the contents from certain gases such as oxygen. The resulting product may however be difficult to recycle.

Recently a new type of packaging has been developed, where a blow molded bottle or container is coupled with a fibre-based shell, preferably a cellulose fibre-based shell. This makes it possible to minimize the amount of plastic, as the plastic container can be made very thin as the fibre-based shell provide the rigidity. It is also easier to separate the plastic and fibre-based parts, greatly simplifying recycling of both materials. Systems and processes for the recycling of both plastic and cellulose fibre-based materials are in place, but the functioning of these systems require that the components are easy to separate. In the opposite case, each recycling stream will be contaminated by residues of the other material, where in particular plastic residues remaining in the fibre stream makes this more difficult to recycle.

Blow molding is a widely used technology for producing packaging for liquids. There are currently three main methods of blow molding: extrusion blow molding (EBM), injection blow molding (IBM), and injection stretch blow molding (ISBM). In EBM, plastic is melted and extruded into a hollow tube (a preform or parison). This preform is then captured by closing it into a cooled metal mold. Air is thereafter blown into the preform, inflating it into the shape of a hollow bottle, container, or part. After the plastic has cooled sufficiently, the mold is opened and the part is ejected.

EBM can be sub-divided into continuous and intermittent EBM. In the continuous EBM, the preform is extruded continuously and the individual parts are cut off by a suitable knife. In intermittent EBM there are two processes: straight intermittent and the so called accumulator method. Straight intermittent is similar to injection molding. Here the extruder screw turns, then stops and pushes the melt out. In the accumulator method, an accumulator gathers melted plastic and when the previous mold has cooled and enough plastic has accumulated, a rod pushes the melted plastic and thus forming the preform.

The EBM process is widely used for the manufacture of polyethylene containers such as milk bottles, shampoo bottles etc. There are many advantages of blow molding, such as comparatively low tool and die costs and fast production rates. EBM also allows the molding of complex parts, and for example handles can be incorporated in the design.

There are however disadvantages, such as low strength. For sensitive products, such as foods and beverages, the barrier properties may be insufficient, and to increase barrier properties multilayer preforms of different materials are used. This makes the products less suitable for recycling.

IBM is used for the production of hollow glass and plastic objects in large quantities. In the IBM process, the polymer is injection molded onto a core pin; then the core pin is rotated to a blow molding station to be inflated and cooled. The process is divided into three steps: injection, blowing and ejection. This is the least-used of the three blow molding processes, and is typically used to make small medical and single serve bottles. The main advantage is that IBM produces an injection molded neck with high accuracy. The IBM process is however mainly suited for small capacity bottles as it is difficult to control the base centre during blowing. There is also no increase in barrier strength as the material is not bi-axially stretched.

Consequently, the currently most preferred process for large scale industrial production of blow molded containers of high quality is the ISBM process. This can be performed as a single-stage process or as a two-stage process. Of these processes, the two-stage process appears to be the most widely used. The plastic is first molded into a preform using the injection molding process. These preforms are produced with a proximal portion or "neck" with the dimension and features required for a finished bottle, for example threads or lugs for engaging a cap or lid. The distal portion or "body" of the preform constitutes the thermoplastic material which upon stretch blow molding forms the rest of the container.

These preforms are normally packaged, and can be economically transported to a bottle blowing and filling plant, as the preforms are sufficiently robust for bulk packaging, and require little space. At the bottle blowing plant, the preforms are fed into a reheat stretch blow molding machine. In the ISBM process, the preforms are heated (typically using infrared heaters) above their glass transition temperature, then blown using high-pressure air into bottles using metal blow molds. In the ISBM process, the preform is always stretched with a core rod as part of the process. This produces the bi-axially stretched wall with improved strength.

The biaxial stretching is important for improving the strength and barrier properties of the finished product. In a first vertical stretching, a core rod is inserted into the still hot preform (single-step process) or in the reheated preform (two-stage process). This stretches the material vertically. The blowing which follows, functions to stretch the material horizontally, influencing polymer shape and interaction. The resulting material is less porous and has improved barrier properties, compared to other blow molded articles manufactured without the vertical stretching. These properties make this the preferred method for producing bottles for carbonated beverages.

The ISBM process is suitable for the production of very high volumes, and preforms are often produced and sold as a completed item for a third party to blow. The ISBM imposes very few restrictions on bottle design. It is suitable for cylindrical, rectangular or oval bottles.

It however remains difficult to minimize the amount of plastic used in stretch blow molded containers, in particular bottles for carbonated beverages, and to address the many disadvantages that arise when the wall thickness is reduced.

US 2014252032 (Julie Corbett et al., Ecologic Brands Inc.) discloses a container including a liquid-holding vessel and a skeleton shell supporting the liquid-holding vessel. The liquid-holding vessel may comprise a flexible polymer or plastic material for preventing contact between a liquid stored in or dispensed from the container and the skeleton. The liquid-holding vessel and the closure may be formed from a minimal amount of polymer or plastic. The disclosure also provides for a connection of a liquid-holding vessel with a fitment to the skeleton shell using ultrasonic means. Further, a skeleton shell is provided with mating features allowing the skeleton shell to be formed with smooth edges.

WO 2013/082450 (Julie Corbett et al., Ecologic) discloses a process of manual, semi-automatic and fully- automated integration of discrete components into a container that results in fast, reliable, cost-effective, and scalable production of composite containers. The process can be embodied in manufacturing equipment that has a series of stations and may be called an assembly device. The equipment can produce containers, tubs, canisters, cartridges, etc. which are easily separated into different bio-degradable or compostable parts. The container may have a fitment attached to the liquid-holding liner, which fitment may not turn when the mechanical capper applies the cap in the commercial filling process or when a user attempts to unscrew a cap or top on the container.

US 2014166265 (Thomas E. Nahill and Bruce W. Larsen, Continental PET Technologies Inc.) discloses a preform assembly for blow molding a container including a molded plastic preform having a body and a neck with an external surface. The neck includes a plurality of spaced lands molded integrally with the neck and the body and defining the external surface of the neck, and a plurality of open spaces between the lands. A plastic finish ring is molded separately from the preform and is externally secured over the lands. The open spaces between the lands reduce heat transfer between the preform neck and the finish ring. In two exemplary embodiments of the invention, the lands include either spaced axial ribs or spaced circumferential ribs on the preform neck, and the open spaces include either spaced axial channels or spaced circumferential channels between the ribs.

EP 0 700 837 B1 discloses a compound container, which comprises an inner container of a plastic and an outer container mainly comprising paper and a barrier film adhered to paper. The inner container is composed of a blow-molded or a stretch blow-molded resin composition comprising one or more resins including a barrier resin. The barrier film comprises at least one of an inorganic oxide layer and a metal oxide layer.

JP 2000255577 discloses a composite container comprising an inner layer body having an opening , a barrel and a bottom and an outer layer body covering at least the barrel of the inner layer body and an opening formed on a bottom thereof, which outer layer body is made of a material different from that of the inner layer body. The inner layer body is connected with an engaging portion placed on an external surface of the bottom of the outer layer body through the opening, whereby the inner layer body is engaged with and fixed to the outer layer body.

### SUMMARY

An object of the present disclosure is to enable manufacturing of recyclable containers, wherein the use of non compostable materials can be minimized.

According to a first aspect, there is presented a method in accordance with claim 1.

The blow molding of step b) may be stretch blow molding, such as injection stretch blow molding.

The bottom may comprise an evacuation hole in a centre portion of the bottom of the shell.

The bottom may comprise more than one evacuation holes in a rim of the bottom.

An evacuation hole in a centre portion of the bottom of the shell may be larger than a sprue of the preform.

The shell may be bottle-shaped.

The shell may be formed to contain pressurized goods, such as pressurized liquid, particularly carbonated liquid.

The step a) may be preceded by a step of forming the shell from fibre-based pulp in a shell-forming mold, which shell-forming mold is different from the negative mold used in steps a) and b).

The negative mold may be a split mold with two matching halves.

According to another aspect, there is presented a container in accordance with claim 10.

An advantage with the presented method for forming a container is that the use of the evacuation hole in the bottom of the fibre shell, allowing air in the shell to escape when the plastic liner is blown into the shell, reduces the risk that the shell is damaged during manufacture.

An advantage with the presented method for forming a container is that the use of the evacuation hole in the centre portion of the bottom of the fibre shell, allowing air in the shell to escape when the plastic liner is blown into the shell, also reduces the risk that a sprue or injection point of the preform damages the shell during manufacture.

Generally, all terms used in the claims are to be interpreted according to their ordinary meaning in the technical field, unless explicitly defined otherwise herein. All references to "a, an, the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

The invention is now described, by way of example, with reference to the accompanying drawings, in which:
Fig. 1 schematically illustrates, in sectional view, a shell in a negative mold;
Fig. 2 schematically illustrates a preform;
Fig. 3 schematically illustrates, in sectional view, a shell in a negative mold according to an embodiment not forming part of the present invention.
Fig. 4a schematically illustrates, in sectional view, evacuation holes in shell according to an embodiment;
Fig. 4b shows the evacuation holes illustrated in Fig. 4a in a bottom view;
Fig. 4c schematically illustrates, in a bottom view, evacuation holes according to an embodiment;
Fig. 5 schematically illustrates, in sectional view, evacuation holes in shell according to an embodiment;
Fig. 6 schematically illustrates, in sectional view, evacuation holes in shell according to an embodiment not forming part of the present invention; and
Fig. 7 schematically illustrates, in sectional view, a preform in a shell according to an embodiment not forming part of the present invention.

### DETAILED DESCRIPTION

The invention will now be described more fully hereinafter with reference to the accompanying drawings, in which certain embodiments of the invention are shown. This invention may, however, be embodied in many different forms and should not be construed as limited to the embodiments set forth herein; rather, these embodiments are provided by way of example so that this disclosure will be thorough and complete, and will fully convey the scope of the invention to those skilled in the art. Like numbers refer to like elements throughout the description.

The expression "fibre-based shell" is intended to cover all packaging materials comprising fibres, preferably cellulose fibres. The preferred typ of "fibre-based shell" is a shell made from a paper stock or a paper pulp. As well known to a person skilled in the art, a paper stock may contain many components in addition to cellulose fibres, such as fillers, binders and impurities.

A term "plastic" as in "plastic liner" and "preform made of plastic" denotes any and every type of thermoplastic material suitable for blow molding (such as injection blow molding or stretch blow molding) and allowed for use in packaging, and in particular in the packaging of food and beverages. Examples of thermoplastic materials for use in blow molding include the following: low density polyethylene (LDPE), high density polyethylene (HDPE), polyethylene terephthalate (PET), polypropylene (PP), polylactide (PLA), polyethylene furanoate (PEF), Polyethylene naphthalate (PEN) and polyvinyl chloride (PVC).

The most frequently used thermoplastic is currently PET. A person skilled in the art is fully capable of selecting a suitable plastic material without inventive effort. It is also possible to use composite material and various coatings to improve the barrier properties of the liner, and again, a person skilled in the art can choose appropriate alternatives without departing from the scope of the present disclosure.

An expression "pressurized goods" is intended to encompass all goods, including food and beverages, which are packaged under pressure. Examples include, but are not limited to pressurized liquids, such as beverages packed in an inert atmosphere, for example fruit juices packed with an inert gas, for example nitrogen, in the dead space of the container, and carbonated beverages. The most preferred embodiments relate to methods and containers for carbonated beverages.

The inventors have noticed that when a plastic preform is blow molded into a shell of dried pulp, cracks may form in the shell even though the shell has been arranged in a matching negative mold supposedly preventing the shell from expanding and thus cracking during the blow molding process.

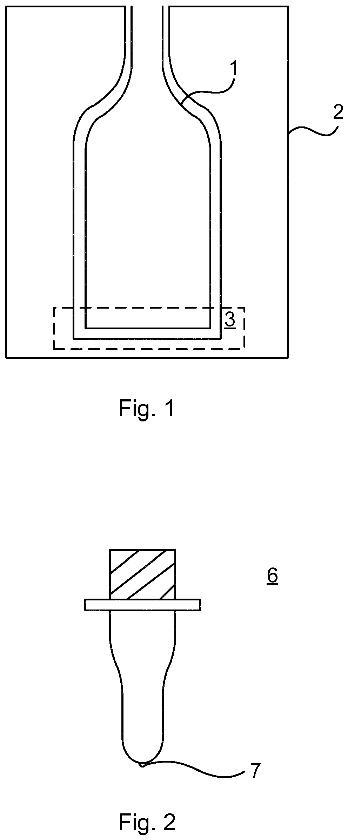

A container-shaped, fibre-based shell 1 is illustrated in sectional view in Fig. 1, inside a negative mold 2. The shell 1 has a proximate part, comprising an opening of the container, and a distal part comprising a containing part of the container. A bottom part 3 of the shell 1 is here illustrated in the bottom of the drawing, but as long as the bottom 3 of the shell is in a generally opposite direction of the opening of the shell 1, the bottom 3 of the shell 1 may be directed in any direction, including upwards and side wards.

A preform 6 is illustrated in Fig. 2, to be used inside the shell 1 illustrated in Fig. 1, to form a plastic liner inside the shell 1. The preform 6 has a sprue 7 in its bottom end, which is an undesired residue generally resulting form manufacture of the preform.

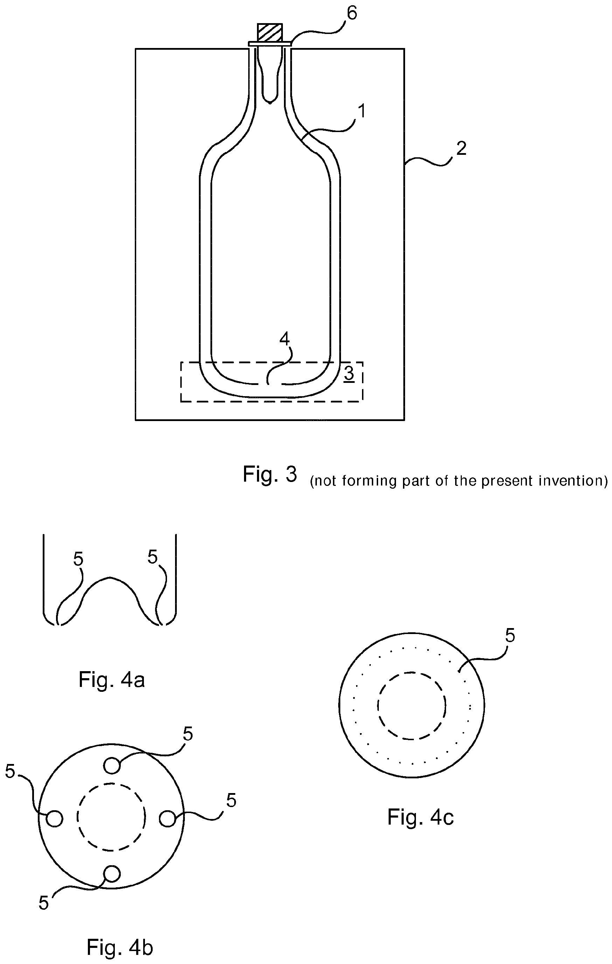

A method for forming a container, according to an embodiment, is presented with reference to Fig. 3.

The method comprises the steps of
a) providing a container-shaped, fibre-based shell 1 in a negative mold 2 matching the shape of the shell 1, wherein the shell 1 has a non-flat shaped bottom 3 with an evacuation hole 4 in a lowest portion of the bottom of the shell 1, and
b) blow molding a preform 6 inside the shell 1 such that a plastic lining is formed on an inner surface of the shell and an outer surface of the shell is pressed against a wall surface of the negative mold 2.

During blow molding of the preform 6, air is evacuated from the shells interior.

The shell 1 has in this embodiment the evacuation hole 4 arranged in a centre portion of the bottom 3 of the shell, also being the lowest portion of the bottom 3 of the shell 1.

The blow molding of step b) may be stretch blow molding. It may further be injection stretch blow molding.

The bottom 3 may comprise one or more evacuation holes 5 in a rim of the bottom, which is illustrated in Figs. 4a-4c. Figs. 4a and 4b schematically illustrates, in a sectional view from the side and in a view from below, respectively, the bottom 3 with a convex outer part and a concave inner part, sometimes referred to as a champagne bottom. The lowest portion of the bottom 3 is here in the convex outer part, and four evacuation holes 5 are shown evenly distributed along the rim of the bottom 3. Fig. 4c schematically illustrates, in a view from below, a variant wherein the bottom comprises a plurality of small evacuation holes 5, functioning also as a perforation for the shell 1, to facilitate recycling of the container.

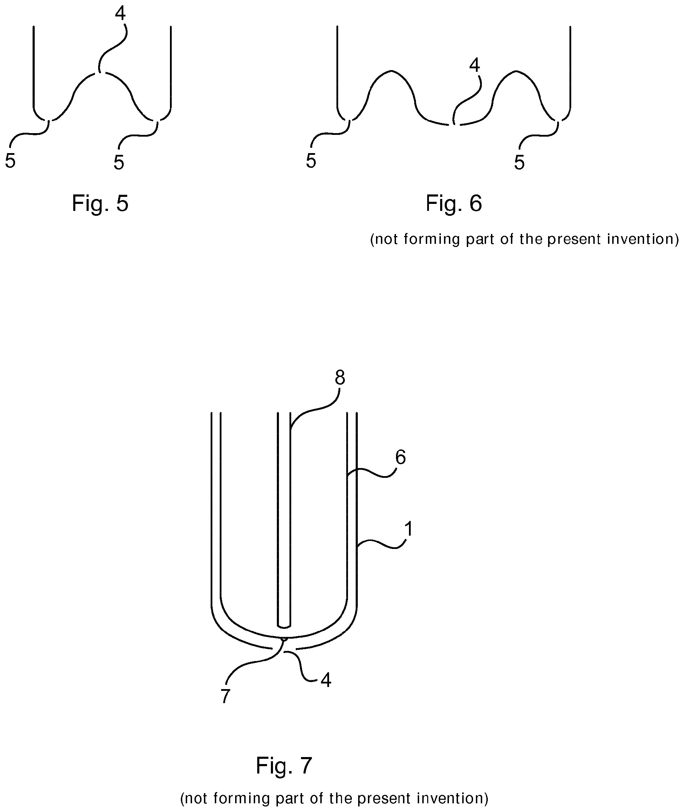

The bottom 3 may comprise an evacuation hole 4 in a centre portion of the bottom 3 of the shell. The evacuation hole 4 in the centre portion may be in addition to evacuation holes 5 in the rim of the bottom 3, which is illustrated in Fig. 5.

The bottom 3 may have a curved surface, such as illustrated in Figs. 3-7.

The curved surface may be convex in an outer rim and concave in a centre portion, as illustrated in Fig. 5.

An evacuation hole 4 in a centre portion of the bottom 3 of the shell 1 may be larger than a sprue 7 of the preform 6, which is illustrated in Fig. 7. A stretch rod 8, used during stretch blow molding, is also illustrated in Fig. 7, which typically will push the sprue 7 of the preform towards, and possibly against, the bottom of the shell 1.

A loss of strength for the container, caused by the evacuation hole 4 in the centre portion is at least partly compensated by the extra lining material provided by the sprue 7. This is not the case with the evacuation holes 5 in the rim. Therefore, it is preferred that the centre portion evacuation hole 4 is large (and provides for evacuation of most of the air inside the shell) compared to the rim portion evacuation holes 5.

A container may have more than one evacuation hole, and the evacuation holes may then have different sizes. The area of each hole in the rim may be smaller than the area of the hole in the centre portion. When there is a plurality of holes in the rim, the combined area of the holes in the rim may be smaller then the hole in the centre portion.

The shell 1 may be bottle-shaped. The shell 1 may be formed to contain pressurized goods, such as pressurized liquid, particularly carbonated liquid. The method may comprise a further step, performed before step a), forming the shell 1 from fibre-based pulp in a shell-forming mold, which shell-forming mold is different from the negative mold 2 used in steps a) and b). Alternatively, the shell 1 may be formed in the negative mold 2, before steps a) and b) are performed.

The negative mold 2 may be a split mold with two matching halves, facilitating providing a preformed shell into the negative mold 2 and removing a formed container from the negative mold 2. The negative mold 2 may further comprise evacuation holes, preferably matching the position of evacuation holes 4, 5 of the shell 1, to allow air to exit the negative mold 2 as well as to exit the shell 1 during blow molding.

## Claims

1. A method for forming a container, the method comprising:
a) providing a container-shaped, fibre-based shell (1) in a negative mold (2) matching the shape of the shell, wherein the shell has a non-flat shaped bottom (3); and
b) blow molding a preform (6) inside the shell such that a plastic lining is formed on an inner surface of the shell and an outer surface of the shell is pressed against a wall surface of the negative mold,
wherein the bottom is convex in an outer rim and concave in a centre portion, **characterized by** having an evacuation hole (5) in a lowest portion of the bottom of the shell.

2. The method of claim 1, wherein the blow molding of step b) is stretch blow molding, such as injection stretch blow molding.

3. The method of claim 1 or 2, wherein the bottom comprises an evacuation hole (4) in a centre portion of the bottom of the shell.

4. The method of any one of claims 1 to 3, wherein the bottom comprises more than one evacuation holes (5) in a rim of the bottom.

5. The method of any one of claims 1 to 4, wherein an evacuation hole (4) in a centre portion of the bottom of the shell is larger than a sprue (7) of the preform.

6. The method of any one of claims 1 to 5, wherein the shell is bottle-shaped.

7. The method of any one of claims 1 to 6, wherein the shell is formed to contain pressurized goods, such as pressurized liquid, particularly carbonated liquid.

8. The method of any one of claims 1 to 7, wherein step a) is preceded by a step of forming the shell from fibre-based pulp in a shell-forming mold, which shell-forming mold is different from the negative mold used in steps a) and b).

9. The method of any one of claims 1 to 8, wherein the negative mold is a split mold with two matching halves.

10. A container, comprising:
a fibre-based shell (1); and
a plastic lining on an inner surface of the shell, wherein the plastic lining has been formed by blow molding a preform inside the shell,
wherein the bottom is convex in an outer rim and concave in a centre portion, **characterized by** having an evacuation hole (5) in a lowest portion of a non-flat shaped bottom of the shell.

11. The container of claim 10, wherein the fibre-based shell (1) has an evacuation hole (4) in the centre portion of the bottom of the shell.

12. The container of claim 10 or 11, wherein the bottom comprises more than one evacuation holes (5) in a rim of the bottom.

13. The container of any one of claims 10 to 12, wherein an evacuation hole (4) in a centre portion of the bottom of the shell is larger than a sprue (7) of the preform.

14. The container of any one of claims 10 to 13, wherein the shell is bottle-shaped.

15. The container of any one of claims 10 to 14, wherein the shell is formed to contain pressurized goods, such as pressurized liquid, particularly carbonated liquid.

## Patentansprüche

1. Verfahren zum Bilden eines Behälters, wobei das Verfahren aufweist:
a) Bereitstellen einer behälterförmigen faserbasierten Hülle (1) in einer Negativform (2), die mit der Form der Hülle übereinstimmt, wobei die Hülle einen nicht flach geformten Boden (3) aufweist; und
b) Blasformen eines Vorformlings (6) innerhalb der Hülle, so dass eine Kunststoffauskleidung auf einer Innenfläche der Hülle gebildet wird und eine Außenfläche der Hülle gegen eine Wandfläche der Negativform gedrückt wird,
wobei der Boden an einem Außenrand konvex und in einem mittleren Abschnitt konkav ist, **dadurch gekennzeichnet, dass** er ein Evakuierungsloch (5) in einem untersten Abschnitt des Bodens der Hülle aufweist.

2. Verfahren nach Anspruch 1, wobei das Blasformen von Schritt b) Streckblasformen, wie etwa Spritzstreckblasformen, ist.

3. Verfahren nach Anspruch 1 oder 2, wobei der Boden ein Evakuierungsloch (4) in einem mittleren Abschnitt des Bodens der Hülle aufweist.

4. Verfahren nach einem der Ansprüche 1 bis 3, wobei der Boden mehr als ein Evakuierungsloch (5) an einem Rand des Bodens aufweist.

5. Verfahren nach einem der Ansprüche 1 bis 4, wobei ein Evakuierungsloch (4) in einem mittleren Abschnitt des Bodens der Hülle größer als ein Anguss (7) des Vorformlings ist.

6. Verfahren nach einem der Ansprüche 1 bis 5, wobei die Hülle flaschenförmig ist.

7. Verfahren nach einem der Ansprüche 1 bis 6, wobei die Hülle dazu gebildet ist, druckbeaufschlagte Waren, wie etwa druckbeaufschlagte Flüssigkeit, insbesondere kohlensäurehaltige Flüssigkeit, zu enthalten.

8. Verfahren nach einem der Ansprüche 1 bis 7, wobei dem Schritt a) ein Schritt vorausgeht des Bildens der Hülle aus faserbasierter Pulpe in einer hüllenbildenden Form, welche hüllenbildende Form sich von der in den Schritten a) und b) verwendeten Negativform unterscheidet.

9. Verfahren nach einem der Ansprüche 1 bis 8, wobei die Negativform eine geteilte Form mit zwei übereinstimmenden Hälften ist.

10. Behälter, aufweisend:
eine faserbasierte Hülle (1); und
eine Kunststoffauskleidung an einer Innenfläche der Hülle, wobei die Kunststoffauskleidung durch Blasformen eines Vorformlings innerhalb der Hülle geformt wurde,
wobei der Boden in einem Außenrand konvex und in einem mittleren Abschnitt konkav ist, **dadurch gekennzeichnet, dass** er ein Evakuierungsloch (5) in einem untersten Abschnitt eines nicht flach geformten Bodens der Hülle aufweist.

11. Behälter nach Anspruch 10, wobei die faserbasierte Hülle (1) ein Evakuierungsloch (4) in dem mittleren Abschnitt des Bodens der Hülle aufweist.

12. Behälter nach Anspruch 10 oder 11, wobei der Boden mehr als ein Evakuierungsloch (5) an einem Rand des Bodens aufweist.

13. Behälter nach einem der Ansprüche 10 bis 12, wobei ein Evakuierungsloch (4) in einem mittleren Abschnitt des Bodens der Hülle größer als ein Anguss (7) des Vorformlings ist.

14. Behälter nach einem der Ansprüche 10 bis 13, wobei die Hülle flaschenförmig ist.

15. Behälter nach einem der Ansprüche 1 bis 14, wobei die Hülle dazu gebildet ist, druckbeaufschlagte Waren, wie etwa unter Druck stehende Flüssigkeit, insbesondere kohlensäurehaltige Flüssigkeit, zu enthalten.

## Revendications

1. Procédé de formation d'un récipient, le procédé comprenant :
a) l'obtention d'une coquille à base de fibres, en forme de récipient (1) dans un moule négatif (2) correspondant à la forme de la coquille, dans lequel la coquille présente un fond profilé non plat (3), et
b) le moulage par soufflage d'une préforme (6) située à l'intérieur de la coquille de sorte qu'un revêtement en plastique est formé sur la surface intérieure de la coquille et qu'une surface extérieure de la coquille est pressée contre une surface de paroi du moule négatif,
dans lequel le fond est convexe dans un rebord externe et concave dans une partie centrale, **caractérisé en ce qu'**il possède un trou d'évacuation (5) situé dans la partie la plus basse du fond de la coquille.

2. Procédé selon la revendication 1, dans lequel le soufflage par moulage de l'étape b) est un soufflage par moulage avec étirage, tel qu'un soufflage par moulage avec étirage par injection.

3. Procédé selon la revendication 1 ou la revendication 2, dans lequel le fond comprend un trou d'évacuation (4) situé dans une partie centrale du fond de la coquille.

4. Procédé selon l'une quelconque des revendications 1 à 3, dans lequel le fond comprend plus d'un trou d'évacuation (5) situé dans un rebord du fond.

5. Procédé selon l'une quelconque des revendications 1 à 4, dans lequel un trou d'évacuation (4) situé dans une partie centrale du fond de la coquille est plus grand qu'une carotte (7) de la préforme.

6. Procédé selon l'une quelconque des revendications 1 à 5, dans lequel la coquille est en forme de bouteille.

7. Procédé selon l'une quelconque des revendications 1 à 6, dans lequel la coquille est formée afin de contenir des produits sous pression, tels qu'un liquide pressurisé, en particulier un liquide gazéifié.

8. Procédé selon l'une quelconque des revendications 1 à 7, dans lequel l'étape a) est précédée d'une étape de formation de la coquille à partir de pâte à base de fibres dans un moule de formation de coquille, le moule de formation de coquille étant différent du moule négatif utilisé dans les étapes a) et b).

9. Procédé selon l'une quelconque des revendications 1 à 8, dans lequel le moule négatif est un moule fendu contenant deux moitiés correspondantes.

10. Récipient, comprenant :
une coquille à base de fibres (1) ;
un revêtement en plastique situé sur une surface interne de la coquille, dans lequel le revêtement en plastique a été formé par moulage par soufflage d'une préforme située à l'intérieur de la coquille,
dans lequel le fond est convexe dans un rebord extérieur et concave dans une partie centrale, caractérisé en ce qui possède un trou d'évacuation (5) situé dans la partie la plus basse d'un fond profilé non plat de la coquille.

11. Récipient selon la revendication 10, dans lequel la coquille à base de fibres (1) comporte un trou d'évacuation (4) situé dans la partie centrale du fond de la coquille.

12. Récipient selon la revendication 10 ou la revendication 11, dans lequel le fond comprend plus d'un trou d'évacuation (5) situé dans un rebord du fond.

13. Récipient selon l'une quelconque des revendications 10 à 12, dans lequel un trou d'évacuation (4) situé dans une partie centrale du fond de la coquille est plus grand qu'une carotte (7) de la préforme.

14. Récipient selon l'une quelconque des revendications 10 à 13, dans lequel la coquille est en forme de bouteille.

15. Récipient selon l'une quelconque des revendications 10 à 14, dans lequel la coquille est formée afin de contenir des produits sous pression, tels qu'un liquide pressurisé, en particulier un liquide gazéifié.
